# EUROPÄISCHE PATENTSCHRIFT

(11) **EP 4 126 611 B1**
(45) Veröffentlichungstag und Bekanntmachung des Hinweises auf die Patenterteilung: **24.12.2025**
(21) Anmeldenummer: 21718012.4
(22) Anmeldetag: 25.03.2021
(51) Int. Cl.: B60T 8/32, B60T 8/174

(54) **BREMSSYSTEM**
BRAKE SYSTEM
SYSTÈME DE FREIN

(30) Priorität: 01.04.2020 DE 102020204221
(43) Veröffentlichungstag der Anmeldung: 08.02.2023
(73) Patentinhaber: AUMOVIO Germany GmbH, 60488 Frankfurt am Main (DE)
(72) Erfinder: BEUSS, Jochen, 60488 Frankfurt am Main (DE)
(74) Vertreter: Aumovio Corporation
(86) Internationale Anmeldenummer: PCT/DE2021/200039
(87) Internationale Veröffentlichungsnummer: WO 2021/197554

(56) Entgegenhaltungen:
- EP-A1- 1 032 518
- EP-A2- 1 889 766
- DE-A1- 102007 036 259

## Beschreibung

Die Erfindung betrifft ein Bremssystem nach dem Oberbegriff des Anspruchs 1.

Das Dokument EP 1 032 518 A1 beschreibt etwa ein elektromechanisches Bremssystem mit einem Pedalmodul, zwei Bremsmodulen und einem Zentralmodul, wobei eine Verbindung zwischen den Bremsmodulen durch einen Datenbus vorgesehen ist. Das Dokument EP 1 889 766 A2 beschreibt ein elektropneumatisches Bremssystem mit einem Druckluftspeicher, einer Einrichtung zur Bremsdruckregelung und eine Steuereinrichtung zur Ansteuerung des Bremssystems. Das Dokument DE 10 2007 036259 A1 beschreibt ein weiteres Bremssystem für ein Fahrzeug.

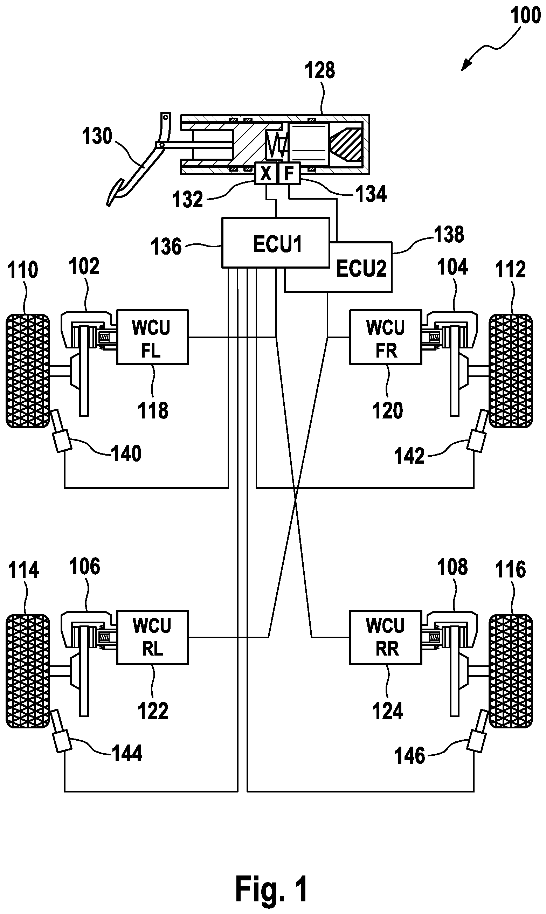

Ein beispielhaftes Bremssystem ist exemplarisch in der Figur 1 abgebildet. Das dargestellte Bremssystem 100 weist dabei insgesamt vier elektromechanische Radbremsen 102, 104, 106 und 108 auf, die jeweils einem Fahrzeugrad 110, 112, 114 und 116 zugeordnet sind. Ferner weist das Bremssystem 100 eine Bremsbetätigungseinheit 128 auf, die zur Erfassung eines Fahrerbremswunschs bei Betätigung des mit der Bremsbetätigungseinheit 128 verbundenen Bremspedals 130 einen Wegsensor 132 und einen Kraftsensor 134 aufweist. Zur Verarbeitung der durch den Wegsensor 132 und den Kraftsensor 134 ermittelten Betätigungsinformationen weist das Bremssystem 100 zwei zentrale Steuereinheiten 136 und 138 auf, wobei der Wegsensor 132 mit der ersten Steuereinheit 136 und der Kraftsensor 138 mit der zweiten Steuereinheit verbunden ist.

An den Fahrzeugrädern 110, 112, 114 und 116 ist ferner jeweils ein Raddrehzahlsensor 140, 142, 144 und 146 angeordnet, der dazu ausgebildet ist, die aktuelle Drehzahl des zugeordneten Fahrzeugrades 110, 112, 114 oder 116 zu ermitteln. Die Raddrehzahlsensoren 140, 142, 144 und 146 sind dabei jeweils direkt mit der Steuereinheit 136 zur Übermittlung der ermittelten Raddrehzahlinformationen verbunden. Die Steuereinheit 136 ist ferner dazu ausgebildet, die empfangenen Raddrehzahlinformationen zu kopieren und an die zweite Steuereinheit 138 weiterzuleiten. Die Steuereinheiten 136 und 138 erzeugen wiederum auf Grundlage der von dem Wegsensor 132 und dem Kraftsensor 134 empfangenen Betätigungsinformation und der Raddrehzahlinformationen Steuersignale, die an die Radbremsen 102, 104, 106 und 108 zu deren Steuerung übermittelt werden.

Die Radbremsen 102, 104, 106 und 108 weisen dabei jeweils eine radindividuelle Steuereinheit 118, 120, 124 und 126 auf, die dazu ausgebildet ist, die von den jeweiligen Radbremsen 102, 104, 106 und 108 ausgeübte Zuspannkraft bzw. das auf die Fahrzeugräder 110, 112, 114 und 116 infolge der Zuspannkraft bewirkte Verzögerungsmoment auf Grundlage der Steuersignale zu steuern. Zur Übermittlung der entsprechenden Informationen ist dabei die erste Steuereinheit 136 ausschließlich mit der radindividuellen Steuereinheit 118 der Radbremse 102 des vorderen linken Rades 110 und der radindividuellen Steuereinheit 124 der Radbremse 108 des hinteren rechten Rades 116 verbunden, während die zweite Steuereinheit 138 ausschließlich mit der radindividuellen Steuereinheit 120 der Radbremse 104 des vorderen rechten Rades 112 und der radindividuellen Steuereinheit 122 der Radbremse 106 des hinteren linken Rades 114 verbunden. So ergibt sich eine Aufteilung der Radbremsen 102, 104, 106 und 108 in diagonale Bremskreise. Zur Übermittlung der Steuersignale wird dabei bevorzugt ein Bussystem verwendet.

Die zuvor beschriebene Infrastruktur hat dabei den Nachteil, dass das Kopieren und Weiterleiten der Raddrehzahlinformationen von der ersten Steuereinheit 136 an die zweite Steuereinheit 138 einen Mehraufwand an Hardware und insbesondere an entsprechenden Leitungsverbindungen bedeutet. Ferner besteht bei einer direkten Verbindung der Steuereinheiten 136 und 138 bei einem Fehler in einem der Bremskreise, beispielsweise infolge einer Fehlfunktion der entsprechenden Energieversorgung, die Gefahr, dass dieser Fehler auch direkt die eigentlich nicht betroffene Steuereinheit beeinflusst.

Ferner werden durch die zentralen Steuereinheiten 136 und 138 in der beschriebenen Infrastruktur unter anderem auch Bremsenregelfunktionen, wie ABS-Regelungen implementiert. Bei Ausfall einer der Steuereinheiten muss dabei die ABS-Regelung der betroffenen Radbremsen auf die verbleibende Steuereinheit übergeben werden. Eine solche störungsfreie Übergabe ist sehr komplex. Schließlich birgt das beschriebene Bremssysteme Nachteile hinsichtlich der Leistungsfähigkeit der ausgeführten Bremsenregelfunktionen, da durch das verwendete Bussystem Totzeiten entstehen, die die Schnelligkeit des Regelkreises negativ beeinflussen.

Der vorliegenden Erfindung liegt demgegenüber die Aufgabe zugrunde, ein verbessertes Bremssystem zu schaffen, das die vorstehend beschriebenen Nachteile des Standes der Technik überwindet.

Die Aufgabe wird mit dem Bremssystem nach Anspruch 1 gelöst. Bevorzugte Ausgestaltungen sind Gegenstand der abhängigen Ansprüche.

Bei einem Bremssystem mit wenigstens zwei elektromechanischen Radbremsen und einer zentralen Steuereinheit, wobei jede elektromechanische Radbremse eine radindividuelle Steuereinheit zur Steuerung des von der jeweiligen Radbremse auf ein Fahrzeugrad bewirkten Verzögerungsmoments aufweist, wobei das Bremssystem ferner wenigstens einen Raddrehzahlsensor je Fahrzeugrad zur Ermittlung einer die Raddrehzahl des entsprechenden Fahrzeugrades beschreibenden Raddrehzahlinformation aufweist, und wobei die zentrale Steuereinheit mit den radindividuellen Steuereinheiten der Radbremsen über einen Datenbus zum Austausch von Steuersignalen verbunden ist, ist erfindungsgemäß vorgesehen, dass die Raddrehzahlsensoren von mit einer elektromechanischen Radbremse ausgestatteten Fahrzeugrädern jeweils direkt mit der radindividuellen Steuereinheit der an dem jeweiligen Fahrzeugrad angeordneten elektromechanischen Radbremse zur Übertragung der ermittelten Raddrehzahlinformationen verbunden sind, wobei die radindividuellen Steuereinheiten jeweils dazu ausgebildet sind, auf Grundlage der empfangenen Raddrehzahlinformationen und der von der zentralen Steuereinheit empfangenen Steuersignale ein durch die der radindividuellen Steuereinheit jeweils zugeordnete Radbremse auf das der Radbremse jeweils zugeordnete Fahrzeugrad bewirkte Verzögerungsmoment zu steuern.

Dabei kann insbesondere vorgesehen sein, dass durch die Steuerung des Verzögerungsmoments durch die radindividuellen Steuereinheiten eine Bremsregelfunktion und insbesondere eine Radschlupfregelung implementiert wird. Hierzu kann vorgesehen sein, dass die Steuersignale insbesondere eine Referenzgeschwindigkeit des Fahrzeugs beinhalten. Durch einen Abgleich dieser Referenzgeschwindigkeit mit der aktuellen Raddrehzahl des zugeordneten Fahrzeugrades können die radindividuellen Steuereinheiten den Schlupf des Fahrzeugrades ermitteln und das von der Radbremse aufgebrachte Verzögerungsmoment durch Regelung der Zuspannkraft der Radbremse entsprechend regeln.

Eine solche Infrastruktur hat dabei eine Reihe von Vorteilen gegenüber aus dem Stand der Technik bekannten Bremssystemen.

Zunächst können die Raddrehzahlsensoren über sehr kurze Leitungen direkt mit den üblicherweise auch im Bereich des Fahrzeugrades angeordneten radindividuellen Steuereinheiten der Radbremsen verbunden werden, was eine Ersparnis an Material und Kosten gegenüber bekannten Bremssystemen bedeutet. Ferner stehen die Raddrehzahlinformationen nahezu ohne Verzögerung den radindividuellen Steuereinheiten zur Verfügung, sodass die Dynamik einer entsprechenden Radschlupfregelung gegenüber dem Stand der Technik verbessert wird.

Dabei ist nach einer Ausführungsform ferner vorgesehen, dass die radindividuellen Steuereinheiten die jeweils von den Raddrehzahlsensoren empfangenen Raddrehzahlinformationen über den Datenbus an die zentrale Steuereinheit übermitteln. Dies hat wiederum den Vorteil, dass bereits vorhandene Infrastruktur in Form des Datenbusses zur Übermittlung der Raddrehzahlinformationen genutzt wird, sodass keine zusätzlichen Verbindungen zwischen den radindividuellen Steuereinheiten und der zentralen Steuereinheit notwendig ist. Ferner können so der zentralen Steuereinheit die Raddrehzahlinformationen sehr schnell zur Verfügung gestellt werden, sodass die Bestimmung und Bereitstellung von Steuersignalen, insbesondere einer Referenzgeschwindigkeit des Fahrzeugs, beschleunigt wird.

Alternativ oder zusätzlich ist nach einer weiteren Ausführungsform vorgesehen, dass wenigstens eine der radindividuellen Steuereinheiten über eine direkte Datenverbindung mit der zentralen Steuereinheit verbunden ist und der zentralen Steuereinheit über die direkte Datenverbindung die empfangenen Raddrehzahlinformation bereitstellt. So kann eine noch schnellere Bereitstellung der Raddrehzahlinformationen an die zentrale Steuereinheit erfolgen, da die Übermittlung nicht mehr an den Datenbus und eventuell vorhandene Totzeiten bei der Übertragung über den Datenbus gebunden ist. Dies kann insbesondere vorteilhaft sein, wenn die radindividuellen Steuereinheiten der Radbremsen der Vorderräder des Fahrzeugs entsprechend angebunden, da die Vorderräder bei einer starken Verzögerung einen Großteil der Bremsleistung aufbringen und folglich insbesondere an diesen Rädern eine schnelle Radschlupfregelung benötigt wird.

Zur Beschleunigung der Bereitstellung der Raddrehzahlinformationen an die zentrale Steuereinheit ist nach einer weiteren Ausführungsform vorgesehen, dass wenigstens einer der Raddrehzahlsensoren sowohl mit der radindividuellen Steuereinheit der dem Fahrzeugrad zugeordneten Radbremse, als auch mit der zentralen Steuereinheit zur Übermittlung der ermittelten Raddrehzahlinformation verbunden ist. Auf diese Weise wird ferner eine Signalredundanz geschaffen, da die Raddrehzahlinformationen auch dann noch der zentralen Steuereinheit bereitgestellt werden können, wenn eine radindividuelle Steuereinheit ausgefallen ist und die Raddrehzahlinformationen folglich nicht mehr weitergeleitet werden.

Die Bereitstellung der Raddrehzahlinformationen an die zentrale Steuereinheit kann dabei nach einer weiteren Ausführungsform ferner dadurch beschleunigt werden, dass an wenigstens einem der Fahrzeugräder zwei Raddrehzahlsensoren angeordnet sind, wobei einer der Raddrehzahlsensoren mit der zentralen Steuereinheit und der andere Raddrehzahlsensor mit der radindividuellen Steuereinheit der dem Fahrzeugrad zugeordneten Radbremse zur Übermittlung der ermittelten Raddrehzahlinformation verbunden ist. Ein weiterer Vorteil einer solchen Anordnung besteht darin, dass auch bei Ausfall eines der Raddrehzahlsensoren eines Rades weiterhin eine Bestimmung der Raddrehzahl und folglich eine Regelung des Verzögerungsmoments möglich ist. Dabei sind beiden Raddrehzahlsensoren eines Fahrzeugrades bevorzugt in einem gemeinsamen Gehäuse untergebracht, jedoch galvanisch voneinander getrennt.

Nach einer weiteren Ausführungsform ist ferner vorgesehen, dass die radindividuellen Steuereinheiten jeweils mit wenigstens einer weiteren radindividuellen Steuereinheit des Bremssystems zum Austausch der jeweils ermittelten Raddrehzahlinformationen direkt verbunden sind.

Zur Kommunikation der Raddrehzahlinformationen zwischen den radindividuellen Steuereinheiten kann insbesondere ein Bus-System, vorzugsweise in Form einer zwischen den radindividuellen Steuereinheiten verlaufenden Datenverbindungsleitung, eingesetzt werden. Auf diese Weise sind die radindividuellen Steuereinheiten in der Lage, bei einem Ausfall der zentralen Steuereinheit selbstständig eine Referenzgeschwindigkeit des Fahrzeugs zu ermitteln, indem die Raddrehzahlinformationen unter den radindividuellen Steuereinheiten ausgetauscht und jeweils eigenständig Radgeschwindigkeiten berechnet werden, sodass auch weiterhin eine Regelung der durch die Radbremsen aufgebrachten Verzögerungsmomente möglich ist.

Dabei ist nach einer weiteren Ausführungsform zur Verbesserung der Ausfallsicherheit des Bremssystems ferner vorgesehen, dass das Bremssystem eine Bremsbetätigungseinheit aufweist, die dazu ausgebildet ist, bei Betätigung durch einen Fahrzeugführer eine der Betätigung entsprechende Bremsanforderungsinformation auszugeben, wobei die Bremsbetätigungseinheit mit wenigstens einer der radindividuellen Steuereinheiten zur Übertragung der Bremsanforderungsinformation direkt verbunden ist. Hierbei kann insbesondere vorgesehen sein, dass die Bremsbetätigungseinheit zwei voneinander unabhängige Sensoren zur Erfassung eines Bremswunsches eines Fahrzeugführers aufweist, wobei ein erster der Sensoren direkt mit der zentralen Steuereinheit des Bremssystems verbunden ist, während ein zweiter der Sensoren direkt mit einer der radindividuellen Steuereinheiten verbunden ist.

So können Bremsanforderungen bzw. die entsprechenden Bremsanforderungsinformationen direkt von den radindividuellen Steuereinheiten verarbeitet werden, sodass ein Ausfall der zentralen Steuereinheit vollständig kompensiert werden kann.

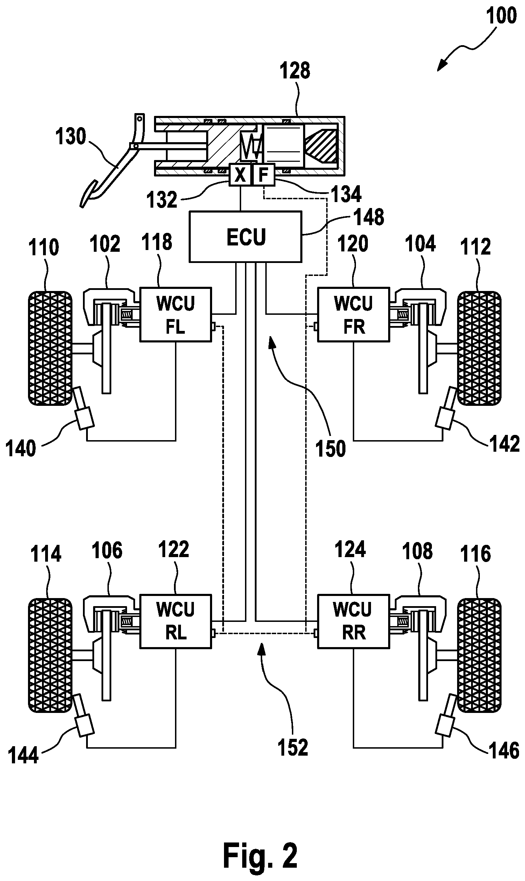

Im Folgenden werden bevorzugte Ausgestaltungen des erfindungsgemäßen Bremssystems anhand der Zeichnungen näher erläutert. Dabei zeigen die Figuren 2 bis 5 schematische Darstellungen unterschiedlicher Varianten eines erfindungsgemäßen Bremssystems. In der nachfolgenden Beschreibung werden einander ähnliche oder identische Merkmale mit denselben Bezugszeichen gekennzeichnet.

Das in Figur 2 dargestellte Bremssystem 100 weist analog zu dem Bremssystem der Figur 1 vier elektromechanische Radbremsen 102, 104, 106 und 108 auf, die jeweils dazu ausgebildet sind, die Fahrzeugräder 110, 112, 114 und 116, an denen sie angeordnet sind, mit einem Verzögerungsmoment zu beaufschlagen. Die Radbremsen 102, 104, 106 und 108 weisen dabei jeweils eine radindividuelle Steuereinheit 118, 120, 122 und 124 auf, die zur Steuerung der jeweils zugeordneten Radbremse 102, 104, 106 und 108 hinsichtlich der ausgeübten Zuspannkraft und mithin des auf das entsprechende Fahrzeugrad 110, 112, 114 und 116 bewirkten Verzögerungsmoments ausgebildet sind. Ferner ist an jedem Fahrzeugrad 110, 112, 114 und 116 jeweils ein Raddrehzahlsensor 140, 142, 144 und 146 angeordnet, der dazu ausgebildet ist, eine aktuelle Raddrehzahl des entsprechenden Fahrzeugrades 110, 112, 114, 116 zu bestimmen.

Ferner weist auch das Bremssystem 100 der Figur 2 eine Bremsbetätigungseinheit 128 auf, die mittels zweier Sensoren 132 und 134 bei einer Betätigung eines der Bremsbetätigungseinheit 128 zugeordneten Bremspedals 130 entsprechende Betätigungsinformationen ausgeben. Dabei handelt es sich in dem dargestellten Beispiel bei dem ersten Sensor 132 um einen Wegsensor und bei dem zweiten Sensor 134 um einen Kraftsensor. Im Unterschied zu dem zuvor mit Bezug zu Figur 1 diskutierten Bremssystem 100, weist das Bremssystem 100 der Figur 2 jedoch nur eine einzelne zentrale Steuereinheit 148 auf. Die zentrale Steuereinheit 148 ist dabei mit dem Kraftsensor 132 zur Übermittlung einer erfassten Betätigungsinformation verbunden. Ferner ist die zentrale Steuereinheit 148 mit jeder der radindividuellen Steuereinheiten 118, 120, 122 und 124 direkt über ein erstes, sternförmiges Bussystem 150 verbunden.

Die Raddrehzahlsensoren 140, 142, 144 und 146 sind ferner jeweils direkt mit den radindividuellen Steuereinheiten 118, 120, 122 und 124 der entsprechenden Räder 110, 112, 114 und 116 zur Übermittlung einer ermittelten Raddrehzahlinformation verbunden. Die so kommunizierten Raddrehzahlinformationen werden dann durch die radindividuellen Steuereinheiten 118, 120, 122 und 124 an die zentrale Steuereinheit 148 übermittelt, sodass die zentrale Steuereinheit 148 die Raddrehzahlinformation zur Ermittlung von Steuersignalen für die Radbremsen 102, 104, 106, 108 verwenden kann. Beispielsweise kann dabei vorgesehen sein, dass die zentrale Steuereinheit 148 aus den empfangenen Raddrehzahlinformationen eine Referenzgeschwindigkeit des Fahrzeugs ermittelt und diese als Steuersignal über das Bussystem 150 an die radindividuellen Steuereinheiten 118, 120, 122 und 124 übermittelt.

Die radindividuellen Steuereinheiten 118, 120, 122 und 124 sind dann dazu ausgebildet, aus den von den direkt verbundenen Raddrehzahlsensoren 140, 142, 144 und 146 erhaltenen Raddrehzahlinformationen und dem Steuersignal der zentralen Steuereinheit 148 einen Radschlupf zu ermitteln und gegebenenfalls die Radbremsen 102 so anzusteuern, dass der Radschlupf innerhalb definierter Grenzen bleibt.

Ferner sind in dem dargestellten Bremssystem 100 die radindividuellen Steuereinheiten 118, 120, 122 und 124 jeweils untereinander über ein zweites Bussystem 152 miteinander verbunden. Dabei ist das Bussystem 152 so ausgebildet, dass jede radindividuelle Steuereinheit 118, 120, 122 und 124 mit maximal zwei weiteren radindividuellen Steuereinheiten 118, 120, 122 und 124 verbunden ist, sodass sich eine Kette von verbundenen radindividuellen Steuereinheiten 118, 120, 122 und 124 ergibt. So ist in der dargestellten Ausgestaltung die radindividuelle Steuereinheit 118 der Radbremse 102 des vorderen linken Rades 110 ausschließlich direkt mit der radindividuelle Steuereinheit 122 der Radbremse 106 des hinteren linken Rades 114 verbunden. Die radindividuelle Steuereinheit 122 der Radbremse 106 des hinteren linken Rades 114 ist wiederum mit der radindividuelle Steuereinheit 124 der Radbremse 108 des hinteren rechten Rades 116 verbunden, die wiederum mit der radindividuellen Steuereinheit 120 der Radbremse 104 des vorderen rechten Rades 112 verbunden ist. Schließlich ist noch die radindividuelle Steuereinheit 120 der Radbremse 104 des vorderen rechten Rades 112 mit dem Kraftsensor 134 der Bremsbetätigungseinheit 128 zur Übermittlung eines Betätigungssignals verbunden.

Durch das über das zweite Bussystem 152 verbundene Netzwerk sind die radindividuellen Steuereinheiten 118, 120, 122 und 124 dazu ausgebildet, die jeweils empfangenen Raddrehzahlinformationen mit den weiteren radindividuellen Steuereinheiten 118, 120, 122 und 124 auszutauschen und beispielsweise bei einem Ausfall der zentralen Steuereinheit 148 eigenständig eine Referenzgeschwindigkeit des Fahrzeugs aus den so erhaltenen Raddrehzahlinformationen zu bestimmen. Dabei kann ferner eine Bremsanforderung aufgrund der Verbindung des Bussystems 152 mit dem Kraftsensor 134 der Bremsbetätigungseinheit 128 ermittelt werden, sodass ein Ausfall der zentralen Steuereinheit 148 vollständig kompensiert werden kann.

Das beschriebene Bremssystem 100 hat dabei den Vorteil, dass eine Regelung der von den Radbremsen 102, 104, 106 und 108 auf die Räder 110, 112, 114 und 116 bewirkten Verzögerungsmomente dezentral erfolgt, wobei die hierzu benötigten Raddrehzahlinformationen den radindividuellen Steuereinheiten 118, 120, 122 und 124 über sehr kurze Signalwege zur Verfügung gestellt werden, was eine hohe Regeldynamik ermöglicht. Ferner kann durch die Verwendung des zweiten Bussystems 152 ein Ausfall der zentralen Steuereinheit 148 kompensiert werden, sodass durch die beschriebene Auslegung des Bremssystems auch eine Rückfallebene realisiert werden kann. Dabei sind die radindividuellen Steuereinheiten 118, 120, 122 und 124 bevorzugt elektrisch getrennt, sodass Fehlfunktionen in einer Komponente des Systems nicht zu einem Ausfall des Bremssystems 100 insgesamt führen. Selbst wenn einzelne Radbremsen 102, 104, 106 oder 108 ausfallen sollten, kann weiterhin eine Radschlupfregelung durch zumindest die drei verbleibenden Radbremsen 102, 104, 106 oder 108 durchgeführt werden.

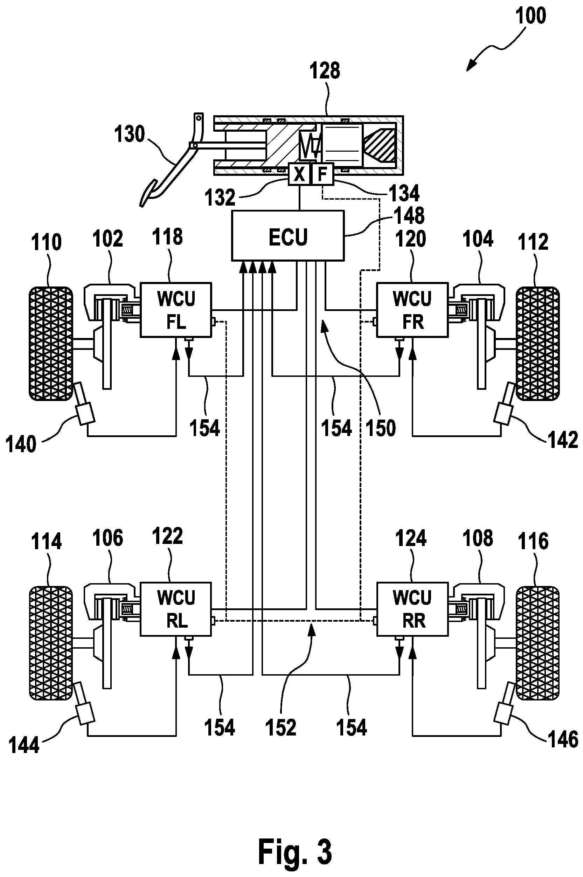

Die Figur 3 zeigt in einer schematischen Darstellung eine leicht abgewandelte Variante des zuvor mit Bezug zu Figur 2 beschriebenen Bremssystems 100. Dabei sind die radindividuellen Steuereinheiten 118, 120, 122 und 124 jeweils zusätzlich über direkte Datenverbindungen 154 direkt mit der zentralen Steuereinheit 148 verbunden. Dabei ist vorgesehen, dass die radindividuellen Steuereinheiten 118, 120, 122 und 124 über die direkten Datenverbindungen 154 die von den jeweiligen Raddrehzahlsensoren 140, 142, 144 und 146 empfangenen Raddrehzahlinformationen direkt an die zentrale Steuereinheit 148 übermitteln. Hierzu kann beispielsweise vorgesehen sein, dass die radindividuellen Steuereinheiten 118, 120, 122 und 124 die jeweils empfangenen Raddrehzahlinformationen direkt nach Empfang kopieren und ohne Zeitverlust über die direkte Datenverbindung 154 weitergeben. Die von der zentralen Steuereinheit 148 erzeugten Steuersignale werden jedoch bevorzugt weiterhin über das erste Bussystem 150 an die radindividuellen Steuereinheiten 118, 120, 122 und 124 übermittelt. Durch die direkte Anbindung der radindividuellen Steuereinheiten 118, 120, 122 und 124 an die zentrale Steuereinheit 148 zur Übermittlung der Raddrehzahlinformationen kann die Bereitstellung der Raddrehzahlinformationen an die zentrale Steuereinheit 148 beschleunigt werden, was insgesamt die Dynamik einer umgesetzten Bremsregelfunktion verbessert.

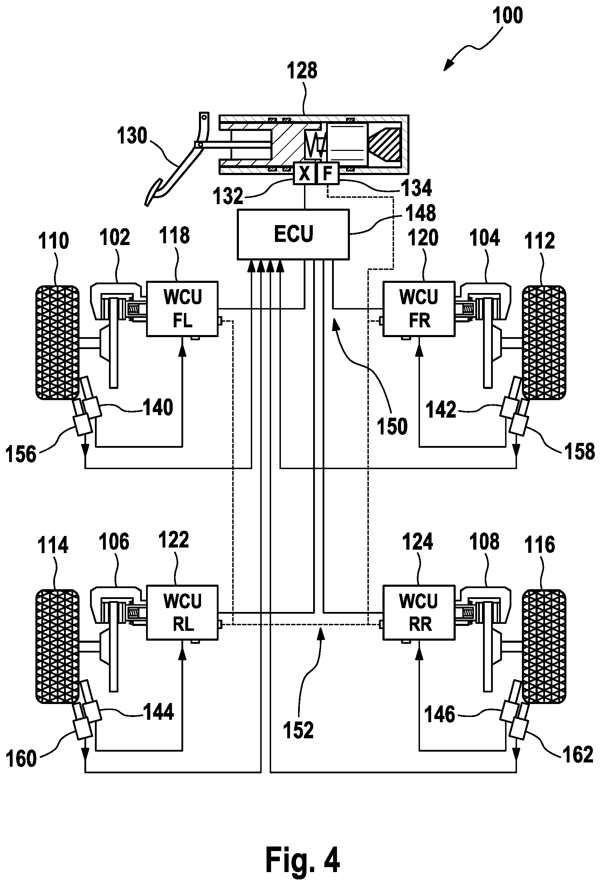

Eine weitere Variante des mit Bezug zu Figur 2 diskutierten Bremssystems 100, die der Beschleunigung einer Bereitstellung der Raddrehzahlinformationen an die zentrale Steuereinheit 148 dient, ist in der Figur 4 dargestellt. Dabei ist gegenüber dem in Figur 2 dargestellten Bremssystem 100 zusätzlich vorgesehen, dass je Fahrzeugrad 110, 112, 114 und 116 jeweils ein zusätzlicher Raddrehzahlsensor 156, 158, 160 und 162 vorgesehen ist, der ebenfalls zur Ermittlung der Raddrehzahl des zugeordneten Fahrzeugrades 110, 112, 114, 116 ausgebildet ist. Die zusätzlichen Raddrehzahlsensoren 156, 158, 160 und 162 sind dabei jeweils direkt mit der zentralen Steuereinheit 148 verbunden, sodass die ermittelten Raddrehzahlen der zentralen Steuereinheit 148 im Idealfall in Echtzeit bereitgestellt werden.

Neben der beschriebenen schnelleren Bereitstellung der Raddrehzahlinformationen an die zentrale Steuereinheit 148 hat die in Figur 4 dargestellte Ausgestaltung des Bremssystems 100 ferner den Vorteil, dass auch bei Ausfall eines der Raddrehzahlsensoren 140, 142, 144 oder 146 weiterhin eine Radschlupfregelung an dem betroffenen Fahrzeugrad 110, 112, 114 oder 116 möglich ist, da weiterhin durch den verbleibenden Raddrehzahlsensor 156, 158, 160 oder 162 die benötigten Raddrehzahlinformationen bereitgestellt werden.

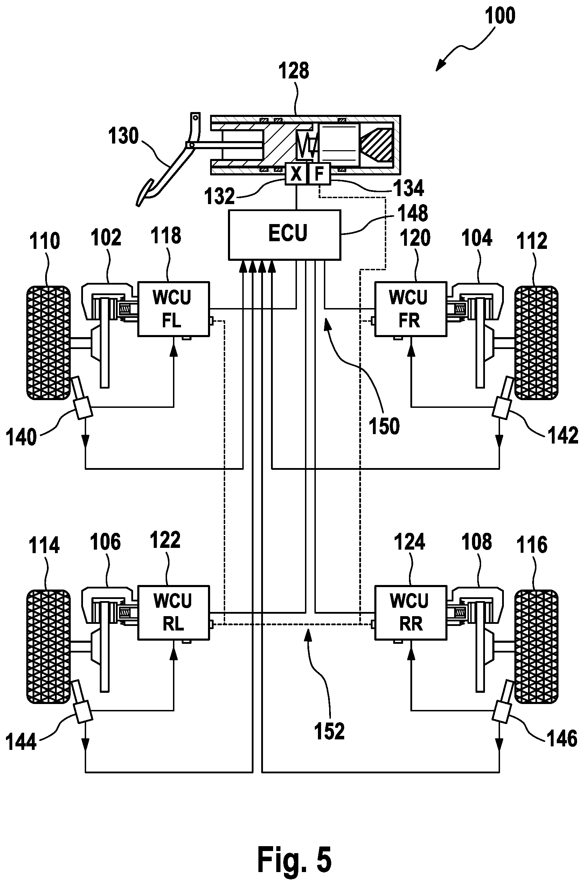

In einer hierzu alternativen Ausgestaltung des Bremssystems 100, die in der Figur 5 dargestellt ist, sind die zusätzlichen Raddrehzahlsensoren 156, 158, 160 und 160 in die jeweils vorhandenen Raddrehzahlsensoren 140, 142, 144 und 146 integriert. So können ausgehend von den vier Raddrehzahlsensoren 140, 142, 144 und 146 sowohl direkte Verbindungen mit den radindividuellen Steuereinheiten 118, 120, 122 und 124, als auch Verbindungen direkt mit der zentralen Steuereinheit 148 zur Übermittlung der Raddrehzahlinformationen hergestellt werden, sodass auch hier eine Bereitstellung der Raddrehzahlinformationen in Echtzeit möglich ist.

Dabei sind die Raddrehzahlsensoren 156, 158, 160 und 160, die in dieser Ausgestaltung in den Gehäusen der Raddrehzahlsensoren 140, 142, 144 und 146 integriert sind, jeweils von dem in demselben Gehäuse angeordneten Raddrehzahlsensoren 140, 142, 144 oder 146 galvanisch getrennt, sodass eine gegenseitige Beeinflussung der Raddrehzahlsensoren vermieden wird.

In den Varianten der Figuren 4 und 5 kann dabei ferner vorgesehen sein, dass, trotz der direkten Anbindung der Raddrehzahlsensorik an die zentrale Steuereinheit 148, die radindividuellen Steuereinheiten 118, 120, 122 und 124 weiterhin die empfangenen Raddrehzahlinformationen an die zentrale Steuereinheit 148 weiterleiten, sodass eine Redundanz der Signalübermittlung geschaffen wird.

## Patentansprüche

1. Bremssystem (100) mit wenigstens zwei elektromechanischen Radbremsen (102, 104, 106, 108) und einer zentralen Steuereinheit (148),
wobei jede elektromechanische Radbremse (102, 104, 106, 108) eine radindividuelle Steuereinheit (118, 120, 122, 124) zur Steuerung des von der jeweiligen Radbremse (102, 104, 106, 108) auf ein Fahrzeugrad (110, 112, 114, 116) bewirkten Verzögerungsmoments aufweist,
wobei das Bremssystem (100) ferner wenigstens einen Raddrehzahlsensor (140, 142, 144, 146) je Fahrzeugrad (110, 112, 114, 116) zur Ermittlung einer die Raddrehzahl des entsprechenden Fahrzeugrades (110, 112, 114, 116) beschreibenden Raddrehzahlinformation aufweist, und
wobei die zentrale Steuereinheit (148) mit den radindividuellen Steuereinheiten (118, 120, 122, 124) der Radbremsen (102, 104, 106, 108) über einen Datenbus (150) zum Austausch von Steuersignalen verbunden ist,
wobei die Raddrehzahlsensoren (140, 142, 144, 146) von mit einer elektromechanischen Radbremse (102, 104, 106, 108) ausgestatteten Fahrzeugrädern (110, 112, 114, 116) jeweils direkt mit der radindividuellen Steuereinheit (118, 120, 122, 124) der an dem jeweiligen Fahrzeugrad (110, 112, 114, 116) angeordneten elektromechanischen Radbremse (102, 104, 106, 108) zur Übertragung der ermittelten Raddrehzahlinformationen verbunden sind, wobei die radindividuellen Steuereinheiten (118, 120, 122, 124) jeweils dazu ausgebildet sind, auf Grundlage der empfangenen Raddrehzahlinformationen und der von der zentralen Steuereinheit (148) empfangenen Steuersignale ein durch die der radindividuellen Steuereinheit (118, 120, 122, 124) jeweils zugeordnete Radbremse (102, 104, 106, 108) auf das der Radbremse (102, 104, 106, 108) jeweils zugeordnete Fahrzeugrad (110, 112, 114, 116) bewirkte Verzögerungsmoment zu steuern, und dass wenigstens einer der Raddrehzahlsensoren (140, 142, 144, 146) sowohl mit der radindividuellen Steuereinheit (118, 120, 122, 124) der dem Fahrzeugrad (110, 112, 114, 116) zugeordneten Radbremse (102, 104, 106, 108), als auch mit der zentralen Steuereinheit (148) zur Übermittlung der ermittelten Raddrehzahlinformation verbunden ist, **dadurch gekennzeichnet, dass** die Raddrehzahlinformationen auch dann noch der zentralen Steuereinheit bereitgestellt werden können, wenn eine radindividuelle Steuereinheit ausgefallen ist .

2. Bremssystem (100) nach Anspruch 1, **dadurch gekennzeichnet, dass** die radindividuellen Steuereinheiten (118, 120, 122, 124) die jeweils von den Raddrehzahlsensoren (140, 142, 144, 146) empfangenen Raddrehzahlinformationen über den Datenbus (150) an die zentrale Steuereinheit (148) übermitteln.

3. Bremssystem (100) nach Anspruch 1 oder 2, **dadurch gekennzeichnet, dass** wenigstens eine der radindividuellen Steuereinheiten (118, 120, 122, 124) über eine direkte Datenverbindung (154) mit der zentralen Steuereinheit (148) verbunden ist und der zentralen Steuereinheit (148) über die direkte Datenverbindung (154) die empfangenen Raddrehzahlinformation bereitstellt.

4. Bremssystem (100) nach einem der vorherigen Ansprüche, **dadurch gekennzeichnet, dass** an wenigstens einem der Fahrzeugräder (110, 112, 114, 116) zwei Raddrehzahlsensoren (140, 142, 144, 146, 156, 158, 160, 162) angeordnet sind, wobei einer der Raddrehzahlsensoren (156, 158, 160, 162) mit der zentralen Steuereinheit (148) und der andere Raddrehzahlsensor (140, 142, 144, 146) mit der radindividuellen Steuereinheit (118, 120, 122, 124) der dem Fahrzeugrad (110, 112, 114, 116) zugeordneten Radbremse (102, 104, 106, 108) zur Übermittlung der ermittelten Raddrehzahlinformation verbunden ist.

5. Bremssystem (100) nach einem der vorherigen Ansprüche, **dadurch gekennzeichnet, dass** die radindividuellen Steuereinheiten (118, 120, 122, 124) jeweils mit wenigstens einer weiteren radindividuellen Steuereinheit (118, 120, 122, 124) des Bremssystems (100) zum Austausch der jeweils ermittelten Raddrehzahlinformationen direkt verbunden sind.

6. Bremssystem (100) nach Anspruch 5, **dadurch gekennzeichnet, dass** das Bremssystem (100) eine Bremsbetätigungseinheit (128) aufweist, die dazu ausgebildet ist, bei Betätigung durch einen Fahrzeugführer eine der Betätigung entsprechende Bremsanforderungsinformation auszugeben, wobei die Bremsbetätigungseinheit (128) mit wenigstens einer der radindividuellen Steuereinheiten (118, 120, 122, 124) zur Übertragung der Bremsanforderungsinformation direkt verbunden ist.

## Claims

1. A brake system (100) having at least two electromechanical wheel brakes (102, 104, 106, 108) and a central control unit (148),
wherein each electromechanical wheel brake (102, 104, 106, 108) has a wheel-specific control unit (118, 120, 122, 124) for controlling the deceleration torque exerted on a vehicle wheel (110, 112, 114, 116) by the respective wheel brake (102, 104, 106, 108),
wherein the brake system (100) furthermore has at least one wheel speed sensor (140, 142, 144, 146) per vehicle wheel (110, 112, 114, 116) for ascertaining wheel speed information describing the wheel speed of the corresponding vehicle wheel (110, 112, 114, 116), and
wherein the central control unit (148) is connected to the wheel-specific control units (118, 120, 122, 124) of the wheel brakes (102, 104, 106, 108) via a data bus (150) for the exchange of control signals,
wherein the wheel speed sensors (140, 142, 144, 146) of vehicle wheels (110, 112, 114, 116) equipped with an electromechanical wheel brake (102, 104, 106, 108) are each directly connected to the wheel-specific control unit (118, 120, 122, 124) of the electromechanical wheel brake (102, 104, 106, 108) arranged at the respective vehicle wheel (110, 112, 114, 116) for the transmission of the ascertained wheel speed information, wherein the wheel-specific control units (118, 120, 122, 124) are each configured to, on the basis of the received wheel speed information and the control signals received from the central control unit (148), control a deceleration torque exerted by the wheel brake (102, 104, 106, 108) respectively assigned to the wheel-specific control unit (118, 120, 122, 124) on the vehicle wheel (110, 112, 114, 116) respectively assigned to the wheel brake (102, 104, 106, 108), and that at least one of the wheel speed sensors (140, 142, 144, 146) is connected both to the wheel-specific control unit (118, 120, 122, 124) of the wheel brake (102, 104, 106, 108) assigned to the vehicle wheel (110, 112, 114, 116) and to the central control unit (148) for the transmission of the determined wheel speed information, **characterised in that** the wheel speed information can still be provided to the central control unit even if a wheel-specific control unit has failed.

2. The brake system (100) as claimed in claim 1, **characterised in that** the wheel-specific control units (118, 120, 122, 124) transmit the wheel speed information respectively received from the wheel speed sensors (140, 142, 144, 146) to the central control unit (148) via the data bus (150).

3. The brake system (100) as claimed in claim 1 or 2, **characterised in that** at least one of the wheel-specific control units (118, 120, 122, 124) is connected via a direct data connection (154) to the central control unit (148) and provides the received wheel speed information to the central control unit (148) via the direct data connection (154).

4. The brake system (100) as claimed in any one of the preceding claims, **characterised in that** two wheel speed sensors (140, 142, 144, 146, 156, 158, 160, 162) are arranged at at least one of the vehicle wheels (110, 112, 114, 116), wherein one of the wheel speed sensors (156, 158, 160, 162) is connected to the central control unit (148) and the other wheel speed sensor (140, 142, 144, 146) is connected to the wheel-specific control unit (118, 120, 122, 124) of the wheel brake (102, 104, 106, 108) assigned to the vehicle wheel (110, 112, 114, 116) for the transmission of the ascertained wheel speed information.

5. The brake system (100) as claimed in any one of the preceding claims, **characterised in that** the wheel-specific control units (118, 120, 122, 124) are each directly connected to at least one further wheel-specific control unit (118, 120, 122, 124) of the brake system (100) for the exchange of the respectively ascertained wheel speed information.

6. The brake system (100) as claimed in claim 5, **characterised in that** the brake system (100) has a brake actuating unit (128) which is designed to, in the event of actuation by a vehicle driver, output braking request information corresponding to the actuation,
wherein the brake actuation unit (128) is directly connected to at least one of the wheel-specific control units (118, 120, 122, 124) for the transmission of the brake request information.

## Revendications

1. Système de frein (100) comprenant au moins deux freins de roue électromécaniques (102, 104, 106, 108) et une unité de commande centrale (148),
dans lequel chaque frein de roue électromécanique (102, 104, 106, 108) présente une unité de commande individuelle de roue (118, 120, 122, 124) pour commander le couple de décélération provoqué par le frein de roue respectif (102, 104, 106, 108) sur une roue de véhicule (110, 112, 114, 116),
dans lequel le système de frein (100) présente également au moins un capteur de vitesse de roue (140, 142, 144, 146) par roue de véhicule (110, 112, 114, 116) pour déterminer une information de vitesse de roue décrivant la vitesse de roue de la roue de véhicule correspondante (110, 112, 114, 116), et
dans lequel l'unité de commande centrale (148) est reliée aux unités de commande individuelles de roue (118, 120, 122, 124) des freins de roue (102, 104, 106, 108) par l'intermédiaire d'un bus de données (150) pour l'échange de signaux de commande,
dans lequel les capteurs de vitesse de roue (140, 142, 144, 146) des roues de véhicule (110, 112, 114, 116) équipées d'un frein de roue électromécanique (102, 104, 106, 108) sont chacun directement reliés à l'unité de commande individuelle de roue (118, 120, 122, 124) du frein de roue électromécanique (102, 104, 106, 108) disposée sur la roue de véhicule respective (110, 112, 114, 116) pour transmettre les informations de vitesse de roue déterminées, dans lequel les unités de commande individuelles de roue (118, 120, 122, 124) sont chacune conçues pour commander, sur la base des informations de vitesse de roue reçues et des signaux de commande reçus de l'unité de commande centrale (148), un couple de décélération provoqué par le frein de roue (102, 104, 106, 108) respectivement attribué à l'unité de commande individuelle de roue (118, 120, 122, 124) sur la roue du véhicule (110, 112, 114, 116) respectivement affectée au frein de roue (102, 104, 106, 108), et qu'au moins l'un des capteurs de vitesse de roue (140, 142, 144, 146) est relié à la fois à l'unité de commande individuelle de roue (118, 120, 122, 124) du frein de roue (102, 104, 106, 108) attribué à la roue du véhicule (110, 112, 114, 116), ainsi qu'à l'unité de commande centrale (148) pour transmettre les informations de vitesse de roue déterminées, **caractérisé en ce que** les informations de vitesse de roue peuvent toujours être fournies à l'unité de commande centrale même si une unité de commande individuelle de roue est défaillante.

2. Système de frein (100) selon la revendication 1, **caractérisé en ce que** les unités de commande (118, 120, 122, 124) individuelles de roue transmettent les informations de vitesse de roue reçues respectivement par les capteurs de vitesse de roue (140, 142, 144, 146) à l'unité de commande centrale (148) par l'intermédiaire du bus de données (150).

3. Système de frein (100) selon la revendication 1 ou 2, **caractérisé en ce qu'**au moins l'une des unités de commande individuelles de roue (118, 120, 122, 124) est reliée à l'unité de commande centrale (148) par l'intermédiaire d'une liaison de données directe (154) et fournit à l'unité de commande centrale (148), par l'intermédiaire de la liaison de données directe (154), l'information de vitesse de roue reçue.

4. Système de frein (100) selon l'une des revendications précédentes, **caractérisé en ce que** deux capteurs de vitesse de roue (140, 142, 144, 146, 156, 158, 160, 162) sont disposés sur au moins l'une des roues de véhicule (110, 112, 114, 116), dans lequel l'un des capteurs de vitesse de roue (156, 158, 160, 162) est relié à l'unité de commande centrale (148) et l'autre capteur de vitesse de roue (140, 142, 144, 146) est relié à l'unité de commande individuelle de roue (118, 120, 122, 124) du frein de roue (102, 104, 106, 108) attribué à la roue du véhicule (110, 112, 114, 116) pour transmettre les informations de vitesse de roue déterminées.

5. Système de frein (100) selon l'une des revendications précédentes, **caractérisé en ce que** les unités de commande (118, 120, 122, 124) individuelles de roue sont reliées directement à au moins une autre unité de commande individuelle de roue (118, 120, 122, 124) du système de frein (100) pour l'échange des informations de vitesse de roue respectivement déterminées.

6. Système de frein (100) selon la revendication 5, **caractérisé en ce que** le système de frein (100) présente une unité d'actionnement de frein (128) conçue pour délivrer une information de demande de frein correspondant à l'actionnement lors de l'actionnement par un conducteur de véhicule,
dans lequel l'unité d'actionnement de frein (128) est reliée directement à au moins l'une des unités de commande (118, 120, 122, 124) individuelles de roue pour la transmission de l'information de demande de frein.
